(19) Europäisches Patentamt
European Patent Office
Office européen des brevets

(11) **EP 4 368 412 A1**

(12) **EUROPEAN PATENT APPLICATION**

(43) Date of publication:
**15.05.2024 Bulletin 2024/20**

(21) Application number: **23206579.7**

(22) Date of filing: **30.10.2023**

(51) International Patent Classification (IPC):
*B60C 1/00* (2006.01)      *B60C 13/02* (2006.01)
*C08L 7/00* (2006.01)      *C08L 9/06* (2006.01)
*C08L 9/00* (2006.01)      *C08K 3/04* (2006.01)
*C08K 3/36* (2006.01)

(52) Cooperative Patent Classification (CPC):
(C-Sets available)
**B60C 1/0025; B60C 13/001; B60C 13/002; B60C 13/02**                                      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 JP 2022181352**

(71) Applicant: **Sumitomo Rubber Industries, Ltd.
Kobe-shi, Hyogo 651-0072 (JP)**

(72) Inventor: **MORI, Kenji
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)      It is an object of the present invention to provide a tire with improved high-speed durability. Provided is a tire comprising a pair of sidewalls, wherein each of the pair of sidewalls is composed of a rubber composition comprising a rubber component and a filler, wherein, when a test piece is fixed and a cut is made into the test piece under a predetermined test condition, a crack growth rate of the rubber composition satisfies at least one of 0.20 m/s or less in a case where a strain of the fixed test piece is 250%, and 0.30 m/s or less in a case where a strain of the fixed test piece is 300%, wherein the pair of sidewalls comprises a protrusion formation part in which a plurality of minute protrusions are formed on an outer surface, and an area of the protrusion formation part is 10 mm$^2$ or more, wherein twenty or more minute protrusions are formed at intervals of 0.5 mm or less on the protrusion formation part in at least one direction, and wherein a height of a highest part of each of the twenty or more minute protrusions is 0.5 mm or less.

EP 4 368 412 A1

**EP 4 368 412 A1**

(52) Cooperative Patent Classification (CPC): (Cont.)

C-Sets
**C08L 7/00, C08L 9/00, C08L 9/06, C08L 91/00,
C08L 47/00, C08L 61/06, C08L 25/16,
C08L 91/06, C08L 45/00, C08K 3/04, C08K 3/36,
C08K 5/548, C08K 5/18, C08K 3/22, C08K 5/09,
C08K 3/06, C08K 5/47, C08K 5/31, C08K 5/17**

2

**Description**

TECHNICAL FIELD

The present invention relates to a tire.

BACKGROUND OF THE INVENTION

Recently, since abrasion resistance of tires has been improved and duration of use in a market has been prolonged, improvement of various kinds of performance such as deterioration resistance against long-term damage or deterioration of a tire, crack growth resistance, and the like has been required. Since the same rubber surface of a sidewall is used from the beginning of use of a tire until abrasion life, further improvement of durability such as, particularly, crack growth resistance has been required for a rubber composition for sidewall. For example, JP 2018-109126 A discloses a rubber composition comprising silica having a large BET specific surface area for the purpose of improving durability of a sidewall of a tire. However, durability during high-speed running is not mentioned in JP 2018-109126 A, and there is still room for improvement of high-speed durability of a sidewall.

SUMMARY OF THE INVENTION

It is an object of the present invention to provide a tire with improved high-speed durability.
The present invention relates to the following tire:

A tire comprising a pair of sidewalls,
wherein each of the pair of sidewalls is composed of a rubber composition comprising a rubber component and a filler,
wherein a crack growth rate of the rubber composition measured under a following test condition satisfies at least one of:

0.20 m/s or less in a case where a strain of a fixed test piece (constant strain) is 250%; and
0.30 m/s or less in a case where a strain of the fixed test piece (constant strain) is 300%,
wherein the pair of sidewalls comprises a protrusion formation part in which a plurality of minute protrusions are formed on an outer surface, and an area of the protrusion formation part is 10 mm$^2$ or more,
wherein twenty or more minute protrusions are formed at intervals of 0.5 mm or less on the protrusion formation part in at least one direction, and
wherein a height of a highest part of each of the twenty or more minute protrusions is 0.5 mm or less,

(Test condition)

Test piece: pure shear test piece having vertical edges of 22. 4 mm, horizontal edges of 150.0 mm, and a thickness of 1.0 mm, and
Test method: a biaxial tensile test is performed in parallel to a vertical direction of the test piece, the test piece is then fixed, and a cut of 10.0 mm is made in parallel to the horizontal direction from a center point of the vertical edge on one side of the test piece.

According to the present invention, provided is a tire with improved high-speed duration.

BRIEF DESCRIPTION OF THE DRAWINGS

FIG. 1 is a front view of a pure shear test piece and a diagram of the pure shear test piece viewed from a lateral direction.
FIG. 2 is a schematic partial cross-sectional view of a tire relating to one embodiment of the present invention.
FIG. 3 is a schematic view of an outer surface of a sidewall on which a plurality of cylindrical minute protrusions are formed.
FIG. 4 is a schematic view of an outer surface of a sidewall on which a plurality of frustum-shaped minute protrusions are formed.

FIG. 5 is a X-X cross-sectional view of FIG. 4.

FIG. 6 is a schematic view of an outer surface of a sidewall on which a plurality of rib-shaped minute protrusions are formed.

FIG. 7 is a Y-Y cross-sectional view of FIG. 5.

FIG. 8 shows a part of an outer surface of the sidewall when the sidewall is developed on a plane.

FIG. 9 shows a part of an outer surface of a sidewall relating to another embodiment when the sidewall is developed on a plane.

FIG. 10 shows a part of an outer surface of the sidewall relating to another embodiment when the sidewall is developed on a plane.

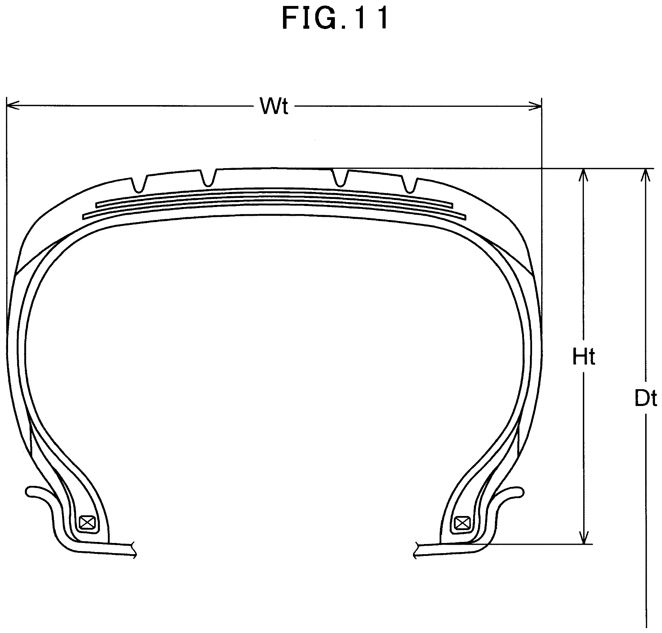

FIG. 11 is a view showing a tire cross-sectional width Wt, a tire cross-sectional height Ht, and a tire outer diameter Dt on a cross section of the tire.

DETAILED DESCRIPTION

A tire of the present invention is a tire comprising a pair of sidewalls, wherein each of the pair of sidewalls is composed of a rubber composition comprising a rubber component and a filler, wherein a crack growth rate of the rubber composition measured under a following test condition satisfies at least one of: 0.20 m/s or less in a case where a strain of a fixed test piece (constant strain) is 250%; and 0.30 m/s or less in a case where a strain of the fixed test piece (constant strain) is 300%, wherein the pair of sidewalls comprises a protrusion formation part in which a plurality of minute protrusions are formed on an outer surface, and an area of the protrusion formation part is 10 mm$^2$ or more, wherein twenty or more minute protrusions are formed at intervals of 0.5 mm or less on the protrusion formation part in at least one direction, and wherein a height of a highest part of each of the twenty or more minute protrusions is 0.5 mm or less,

(Test condition)

Test piece: pure shear test piece having vertical edges of 22. 4 mm, horizontal edges of 150.0 mm, and a thickness of 1.0 mm, and

Test method: a biaxial tensile test is performed in parallel to a vertical direction of the test piece, the test piece is then fixed, and a cut of 10.0 mm is made in parallel to the horizontal direction from a center point of the vertical edge on one side of the test piece.

A mechanism by which the present invention can achieve improvement of high-speed duration is considered as follows, although the following consideration is not intended to be bound by any theory.

In the tire of the present invention, (1) the tire comprises the protrusion formation part in which specific minute protrusions are formed on an outer surface of a sidewall, whereby diffuse reflection of light due to a surface protective film such as wax and the like is suppressed, and crack formation on the surface protective film is suppressed. Moreover, (2) the crack growth rate of the rubber composition for sidewall is at a certain level or less, whereby durability of the sidewall is improved. Then, with cooperation of the above-described (1) and (2), it is considered that a remarkable effect of notably improving high-speed durability of the tire is achieved.

The filler preferably comprises silica.

When the filler comprises silica, silica is dispersed in a rubber component, so that the strength of the rubber composition is reinforced, and it is considered that durability of the tire is improved.

A total content of the filler based on 100 parts by mass of the rubber component is preferably greater than 5 parts by mass and less than 50 parts by mass.

When the content of the filler is within the above-described range, the filler is sufficiently dispersed in a rubber component and occurrence of friction between fillers can also be prevented, so that it is considered that durability of the rubber composition is further improved while securing fuel efficiency.

A tan $\delta$ at 70°C of the rubber composition is preferably 0.10 or more.

When the tan $\delta$ at 70°C is within the above-described range, an effect of suppressing crack growth in occurrence of crack can be obtained, so that it is considered that high-speed durability is further improved.

A total styrene amount S, in % by mass, of the rubber component is preferably greater than 1% by mass and less than 15% by mass.

When the total styrene amount S is within the above-described range, a plasticizing agent is more easily dispersed in the rubber component and becomes compatible to improve a tan $\delta$ in a range from the vicinity of 0°C to a glass transition point, and an effect of suppressing crack growth in occurrence of crack can be obtained, so that it is considered that high-speed durability is further improved.

When a thickness of each sidewall at a maximum width position of the tire is referred to as T, in mm, and the total styrene amount of the rubber component is referred to as S, in % by mass, S/T is preferably 1.0 or more and 9.0 or less.

When S/T is within the above-describe range, a certain amount of a domain of styrene is present even in a case where the sidewall is thin, so that a thermoplastic resin is dispersed in a phase of a styrene-butadiene rubber, energy of a rubber is increased, and energy diffusion at a crack tip is increased, whereby it is considered that high-speed durability is further improved.

The rubber component preferably comprises an isoprene-based rubber.

When the rubber component comprises an isoprene-based rubber, shock resistance is improved, so that it is considered that high-speed durability is further improved.

When a thickness of each sidewall at a maximum width position of the tire is referred to as T, in mm, and a content of the isoprene-based rubber in the rubber component is referred to as I, in % by mass, I/T is preferably 15.0 or more.

When I/T is within the above-described range, it is considered that fuel efficiency and shock resistance are improved.

A ratio ($G/W_L$) of a tire weight G, in kg, to a maximum load capacity $W_L$, in kg, of the tire is 0.0210 or less.

When $G/W_L$ is within the above-described range to reduce the tire weight relative to the maximum load capacity of the tire, influence due to the tire weight becomes small even in a state where a load due to loading or ride is applied to the tire, shock on the entire tire can be reduced, and deformation of the sidewall can be reduced, so that it is considered that durability of the tire is improved.

A product (70°C tan $\delta \times$ Ht) of the tan $\delta$ at 70°C of the rubber composition and a tire cross-sectional height Ht, in mm, is preferably 2.60 or more.

When 70°C tan $\delta \times$ Ht is 2.60 or more so that the tire cross-sectional height Ht has a large value even in a case where a value of 70°C tan $\delta$ is small, deformation of a side part occurring due to heat generation during running can be suppressed, and crack resistance of the sidewall is improved, so that it is considered that high-speed durability is further improved.

A product (70°C tan $\delta \times$ Wt) of the tan $\delta$ at 70°C of the rubber composition and a tire cross-sectional width Wt, in mm, is preferably 25.0 or more.

When 70°C tan $\delta \times$ Wt is 25.0 or more so that the tire cross-sectional width Wt, in mm, has a large value even in a case where a value of the 70°C tan $\delta$ is small, deformation of a side part occurring due to heat generation during running can be suppressed, and crack resistance of the sidewall is improved, so that it is considered that high-speed durability is further improved.

The rubber composition preferably further comprises a resin component. When the resin component is compounded in the rubber composition, a tan $\delta$ can be increased at a lower temperature than 70°C tan $\delta$, and crack resistance of the sidewall is improved, so that it is considered that high-speed durability is further improved. Moreover, when a thermosetting resin is compounded in the rubber composition, crack growth is suppressed by the thermosetting resin, so that crack resistance of the sidewall is improved, whereby it is considered that high-speed durability is further improved.

A shape of each of the minute protrusions is preferably columnar, frustum-shaped, or rib-shaped.

When the minute protrusions have these predetermined shapes, stress concentration on the outer surface of the sidewall can be suppressed, so that it is considered that such shapes contribute to improvement of crack resistance of the sidewall.

<Definition>

A "crack growth rate when a rubber composition is fixed and a cut is made in the rubber composition" is a value calculated by crack growth distance/crack observation time. A method of the measurement will be described below.

A crack growth distance refers to a constant distance by which a crack tip advances after reaching an observation point of a test piece, and it can be, for example, 100 mm.

A crack observation time refers to a time during which a crack tip advances over a crack growth distance after reaching an observation point of a test piece.

A "minute protrusion" refers to a relatively small convex bump formed on an outer surface of a sidewall.

A "protrusion formation part" refers to a part on an outer surface of a sidewall, on which the above-described minute protrusions are formed.

An "area of a protrusion formation part" is defined by a line surrounding outermost parts of a plurality of minute protrusions in the protrusion formation part when a sidewall is developed on a plane.

A "height of a highest part of a minute protrusion" refers to a distance measured along a normal line between a part on an outermost side in a tire radial direction, of a plurality of minute protrusions in a protrusion formation part, and a bottom surface present on an outer surface of a sidewall with the minute protrusion, when the sidewall is developed on a plane.

A "maximum width of a minute protrusion" refers to the largest width among widths of minute protrusions on an outer surface of a sidewall, measured, in one direction in which the minute protrusions are aligned, in a stated where the outer surface of the sidewall is developed on a plane.

An "interval between minute protrusions" refers to the smallest interval among intervals between minute protrusions on an outer surface of a sidewall, measured, in one direction in which the minute protrusions are aligned, in a state where the outer surface of the sidewall is developed on a plane.

The "standardized rim" is a rim, in a standard system including a standard on which a tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which a tire is based, defined for each tire by each standard, i.e., the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard.

A "standardized state" means a state where a tire is rim-assembled to a standardized rim, filled with air at a standardized internal pressure, and applied with no load. Unless otherwise noted, a "size or the like of each part of a tire" is defined as a value specified in a standardized state.

A "standardized load" means a load, in a standard system including a standard on which a tire is based, defined for each tire by the standard. The standardized internal pressure refers to, for example, the "maximum load capacity" in JATMA, "LOAD CAPACITY" in ETRTO or the "maximum value" described in the table "TIRE LOAD LIMITS AT VARIOUS COLD INFLATION PRESSURES" in TRA. Like the standardized rim and the standardized internal pressure, JATMA, ETRTO, and TRA are referred to in this order, and when an applicable size is found during reference to the standard, a standardized load is based on that standard.

A "maximum load capacity ($W_L$), in kg" is a value calculated by the following equations (A) and (B),

$$V = \{(Dt/2)^2 - (Dt/2 - Ht)^2\} \times \pi \times Wt \quad \cdots \quad (A),$$

$$W_L = 0.000011 \times V + 100 \quad \cdots \quad (B),$$

where a tire cross-sectional width measured in a standardized state is referred to as Wt, in mm, a tire cross-sectional height is referred to as Ht, in mm, a tire outer diameter is referred to as Dt, in mm, and a virtual volume of a space occupied by a tire is referred to as V, in $mm^3$.

The tire cross-sectional width Wt is a maximum width between outer surfaces of a sidewall excluding, if any, patterns, letters, or the like on the side surface of the tire, in a standardized state. The "tire cross-sectional height Ht" is a distance from a bottom surface of a bead part to an outermost surface of a tread, and is half a difference between the tire outer diameter Dt and a nominal size of a rim diameter. In the present invention, a maximum load capacity refers to the above-described "maximum load capacity ($W_L$), in kg", unless otherwise specified.

A "thickness T, in mm, of a sidewall" refers to a thickness, in mm, of a rubber constituting the sidewall, measured along a normal line at a tire maximum width position PW of the sidewall. A "tire maximum width position PW" refers to a position on a surface of a sidewall at which the tire cross-sectional width Wt is measured.

A "tire weight" is represented by G, in kg. However, G is a weight of a single tire excluding a weight of a rim. Moreover, in a case where a noise suppressing material, a sealant, a sensor, and the like are attached to a tire lumen, G is a value including weights of these elements.

The "total styrene amount (S) in a rubber component" is a total content (% by mass) of the styrene part compounded in 100% by mass of the rubber component and is calculated by $\Sigma$ (styrene content (% by mass) of each styrene-containing rubber $\times$ content (% by mass) of each styrene-containing rubber in the rubber component / 100). For example, in a case where the rubber component consists of 30% by mass of a first SBR (a styrene content of 25% by mass), 60% by mass of a second SBR (a styrene content of 27.5%), and 10% by mass of a BR, a total styrene amount (S) in 100% by mass of the rubber component is 24.0% by mass (= $25 \times 30/100 + 27.5 \times 60/100$). Besides, a styrene amount of a styrene-containing rubber is calculated by $^1$H-NMR measurement.

A "content of a plasticizing agent" also comprises an amount of a plasticizing agent contained in a rubber component extended with the plasticizing agent. Similarly, a "content of oil" also comprises an amount of oil contained in an oil-extended rubber.

<Measuring method>

A "crack growth rate in case where a rubber composition is fixed and a cut is made in the rubber composition" is a value obtained by dividing crack growth distance by crack observation time when a biaxial tensile test is performed on a pure shear test piece having vertical edges of 22.4 mm, horizontal edges of 150. 0 mm, and a thickness of 1.0 mm, which will be described below, using a biaxial tensile test system (for example, Autograph AG-Xplus manufactured by Shimadzu Corporation) under an atmosphere of a temperature at 25°C, with both axes parallel to a vertical direction, in a state where both horizontal edges are pinched parallelly by an arm, the test piece is then fixed at a point of time at which a strain of the test piece becomes constant, and a cut of 10.0 mm is made in parallel to the horizontal direction using scissors from a middle point of the vertical edge on one side of the test piece. Here, the term "at a point of time when a strain of a test piece becomes constant" refers to a state where the test piece is fixed while a force is being applied so that a length of the test piece becomes constant, and such a strain is also referred to as constant strain. Moreover, a strain of a test piece indicates an amount of displacement relative to a vertical length of a flat part of the test piece.

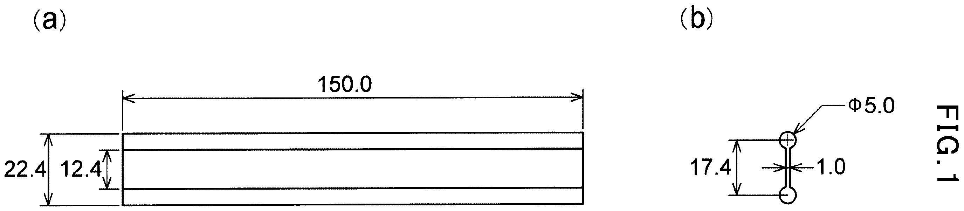

A "pure shear test piece" refers to a test piece having a shape shown in FIG. 1. FIG. 1(a) is a front view of a pure shear test piece. As shown in FIG. 1(a), the pure shear test piece is a rectangle having horizontal edges that are longer than its vertical edges, when it is viewed from its front side. Lengths of the vertical edges are 22.4 mm and lengths of the horizontal edges are 150.0 mm. FIG. 1(b) is a diagram of the pure shear test piece viewed from its lateral side. A thickness of the pure shear test piece is 1.0 mm. As shown in FIG. 1(b), the pure shear test piece comprises a columnar handle part at both ends, the handle part acting as a handle in a tensile test. As shown in FIG. 1(b), a diameter of each circle of the handle part is 5.0 mm, and a vertical length of the flat part is 12.4 mm. That is, the pure shear test piece consists of the handle part and the flat part. The handle part has two cylinders whose center axes are parallel to each other and that have the same length, and positions of both ends of the handle part are aligned with each other. The vertical direction of the pure shear test piece is perpendicular to surfaces of the cylinders of the handle part, and the horizontal direction of the pure shear test piece is parallel to the center axes of the cylinders of the handle part. The flat part is a cuboid, and lengths of vertical edges and the thickness of the cuboid of the flat part are 22.4 mm and 1.0 mm, respectively, like the lengths of the vertical edges and the thickness of the pure shear test piece. A vertical length of the cuboid of the flat part is calculated by subtracting the diameter of 5 mm of the cylinders of the handle part at the both ends from a vertical edge of the pure shear test piece and is 12.4 mm.

"70°C tan $\delta$" is measured, using EPLEXOR series manufactured by gabo Systemtechnik GmbH, under a condition of a temperature at 70°C, a frequency of 10 Hz, an initial strain of 5%, a dynamic strain of $\pm 1\%$, and an extension mode. In a case where a sample is collected from a tire, the sample having a length of 20 mm, a width of 4 mm, and a thickness of 1 mm is collected from a sidewall of the tire such that a tire circumferential direction becomes a long side and a tire radial direction becomes a thickness.

A "styrene content" is a value calculated by $^1$H-NMR measurement and is applied to a rubber component having a repeating unit derived from styrene such as, for example, a SBR and the like. A "vinyl content (1 ,2-bond butadiene unit amount)" is a value calculated in accordance with JIS K 6239-2:2017 by an infrared absorption spectrometry and is applied to a rubber component having a repeating unit derived from butadiene such as, for example, a SBR, a BR, and the like. A "cis content (cis-1 ,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, Mw is applied to SBR, BR, a resin component, a liquid rubber, and the like.

An "average primary particle size" is a value calculated by an arithmetic average of 400 particles after taking photographs of the particles with a transmission or scanning electron microscope, where a diameter of the sphere is defined as a particle size in a case where shapes of the particles are approximately spherical, a minor radius of each of the particles is defined as a particle size in a case where the particles have needle-like or rod-like shapes, and an average of the minor radius and the diameter of each of the particles is defined as a particle size in a case where the particles have indefinite shapes. The average primary particle size is applied to silica, carbon black, and the like.

A "$N_2SA$ of carbon black" is measured according to JIS K 6217-2:2017. A "$N_2SA$ of silica" is measured by a BET method according to ASTM D3037-93.

A "softening point of a resin component" is a temperature at which a sphere drops when the softening point specified in JIS K 6220-1: 2001 is measured with a ring and ball softening point measuring device.

[Tire]

The tire of the present invention will be described below with reference to the drawings as appropriate. However, the drawings are merely examples for explanation.

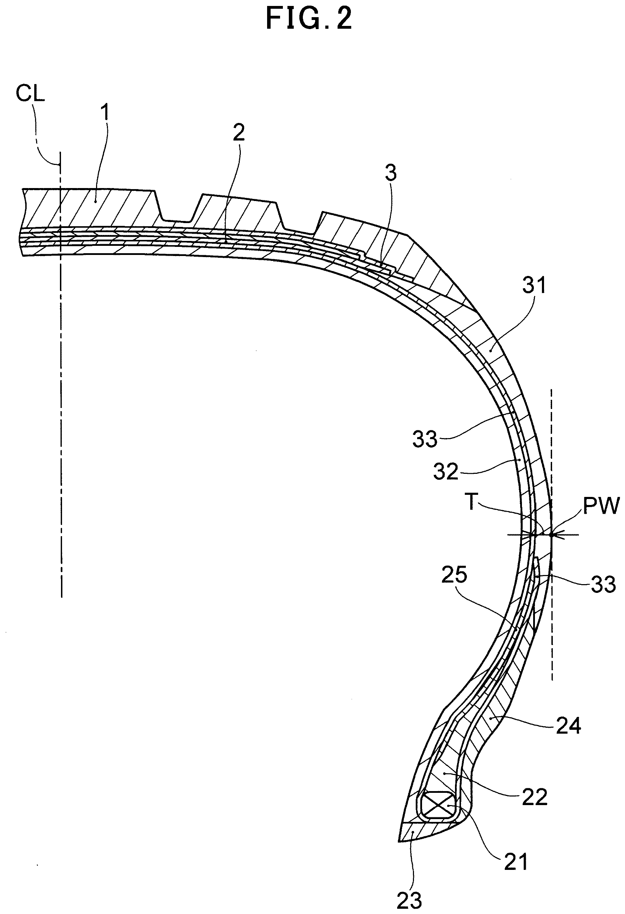

FIG. 2 shows a part of a cross section perpendicular to a circumferential direction of this tire. In FIG, 2, a vertical direction is a tire radial direction, a horizontal direction is a tire width direction, and a direction perpendicular to a paper surface is a tire circumferential direction.

The tire of FIG. 2 comprises a tread 1 extending in a circumferential direction to form an annular shape, a pair of sidewalls 31 arranged on both sides of the tread part, a pair of bead parts each having a bead core 21, at least one layer of carcass 33 that is moored to the bead core 21, and at least one layer of belt 2 that is arranged on the outer side of the carcass 33 in a tire radial direction.

The bead parts are located on the inner sides of the sidewalls 31 in the tire axial direction. Each of the bead parts comprises the bead core 21 and a bead apex 22 extending outward in the tire radial direction from this core. The bead apex 22 tapers off outward in the tire radial direction.

In FIG. 2, the carcass 33 is folded back around the bead core 21 from the inner side toward the outer side in the tire axial direction. By folding back the carcass, a main part and a folded part are formed in the carcass 33. A strip apex 25 generally extends in a tire radial direction. The strip apex 25 is laminated with the beat apex 22 in the vicinity of its inner-side end in the tire radial direction. The strip apex 25 is sandwiched between the main part and the folded part of the carcass 33 in the vicinity of its inner-side end in the radial direction.

<<Crack growth rate>>

In the present invention, a crack growth rate of a rubber composition constituting a sidewall satisfies at least one of 0.20 m/s or less in a case of a strain of 250% and 0.30 m/s or less in a case of a strain of 300%.

<<Crack growth rate in case of strain of 250%>>

In the present invention, the crack growth rate of the rubber composition constituting the sidewall in the case of the strain of 250% is preferably 0.25 m/s or less, more preferably 0.20 m/s or less, further preferably 0.17 m/s or less, further preferably 0.15 m/s or less, further preferably 0.11 m/s or less, further preferably 0.10 m/s or less, particularly preferably 0.08 m/s or less. The crack growth rate in the case of the strain of 250% is a value calculated by the above-described method. When the crack growth rate in the case of the strain of 250% is within the above-described ranges, crack durability of the rubber composition for sidewall is improved, and crack growth resistance of the sidewall is improved, so that high-speed durability of the tire is improved.

The crack growth rate in the case of the strain of 250% can be decreased by increasing a tan $\delta$ of a rubber and can also be decreased by increasing a cross-linking point molecular weight of the rubber (which is a number average molecular weight between cross-linking points).

<<Crack growth rate in case of strain of 300%>>

In the present invention, the crack growth rate of the rubber composition constituting the sidewall in the case of the strain of 300% is preferably 0.50 m/s or less, more preferably 0.40 m/s or less, further preferably 0.30 m/s or less, further preferably 0.25 m/s or less, further preferably 0.20 m/s or less, further preferably 0.15 m/s or less, further preferably 0.12 m/s or less, particularly preferably 0.10 m/s or less. The crack growth rate in the case of the strain of 300% is a value calculated by the above-described method. When the crack growth rate in the case of the strain of 300% is within the above-described ranges, crack durability of the rubber composition for sidewall is improved, and crack growth resistance of the sidewall is improved, so that high-speed durability of the tire is improved.

The crack growth rate in the case of the strain of 300% can be decreased by increasing a tan $\delta$ of a rubber and, can also be decreased by increasing a cross-linking point molecular weight of the rubber (which is a number average molecular weight between cross-linking points).

<<70°C tan $\delta$>>

In the present invention, 70°C tan $\delta$ of the rubber composition constituting the sidewall is preferably 0.09 or more, more preferably 0.10 or more, further preferably 0.11 or more, from the viewpoint of durability. Moreover, it is preferably 0.17 or less, more preferably 0.15 or less, further preferably 0.14 or less, from the viewpoint of fuel efficiency. 70°C tan δ can be adjusted depending on a compounding amount of a filler and the like.

<<Total styrene amount S»

In the present invention, a total styrene amount (S) in a rubber component of the rubber composition constituting the sidewall is preferably less than 20.0% by mass, more preferably less than 18.0, further preferably less than 15.0% by mass, particularly preferably less than 12.0% by mass. When S is greater than 20.0% by mass, aggregation of a styrene part in a rubber matrix (rubber component cross-linked with sulfur) cannot be suppressed, and a plasticizing agent is less likely to be dispersed in the styrene part. Moreover, the total styrene amount S is preferably greater than 1.0% by mass, more preferably 3.0% by mass or more, further preferably 3.5% by mass or more, further preferably 4.0% by mass or more, particularly preferably greater than 4.0% by mass, from the viewpoint of effects of the present invention.

For the tire relating to the present invention, the ratio ($G/W_L$) of the tire weight G, in kg, to the maximum load capacity $W_L$, in kg, is preferably 0.0210 or less, more preferably 0.0205 or less, further preferably 0.0200 or less, particularly preferably 0.0195 or less, from the viewpoint of the effects of the present invention. On the other hand, a lower limit value of $G/W_L$ can be, but not particularly limited to, for example, 0.0090 or more, 0.0100 or more, 0.0110 or more, or 0.0120 or more. Besides, the tire weight G can be changed by a usual method, that is, the tire weight G can be increased by increasing the specific gravity of the tire or by increasing a thickness of each member of the tire and can also be decreased in a reverse manner.

The maximum load capacity $W_L$ (kg) is preferably 300 or more, more preferably 400 or more, further preferably 450 or more, particularly preferably 500 or more, from the viewpoint of better exhibiting the effects of the present invention. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present invention. Besides, the maximum load capacity $W_L$ can be increased by increasing a virtual volume V of a space occupied by the tire and can also be decreased in a reverse manner.

A thickness T, in mm, of each sidewall at the maximum width position of the tire is preferably 1.0 mm or more, more preferably 1.3 mm or more, further preferably 1.5 mm or more, particularly preferably 1.7 mm or more, from the viewpoint of the effects of the present invention. Moreover, T, in mm, is preferably 12.0 mm or less, more preferably 11.0 mm or less, further preferably 10.0 mm or less, particularly preferably 8.0 mm or less, from the viewpoint of the effects of the present invention.

A ratio (S/T) of the total styrene amount S, in % by mass, in the rubber component to the thickness T, in mm, of each sidewall at the maximum width position of the tire is preferably 0.5 or more, more preferably 0.8 or more, further preferably 1.0 or more, further preferably 1.5 or more, further preferably 2.0 or more, particularly preferably 2.5 or more. Moreover, S/T is preferably 9.0 or less, more preferably 6.0 or less, further preferably 5.5 or less, further preferably 5.0 or less, particularly preferably 4.5 or less. When S/T is within the above-described ranges, stress tends to be easily mitigated by a styrene domain part even in a state where rigidity is high due to a thickness of a bead part 4.

A ratio (I/T) of a content I, in % by mass, of an isoprene-based rubber in the rubber component to the thickness T, in mm, of each sidewall at the maximum width position of the tire is preferably 10.0 or more, more preferably 15.0 or more, further preferably 20.0 or more, further preferably 22.0 or more. Moreover, I/T is preferably 35.0 or less, more preferably 30.0 or less, further preferably 23.5 or less. When I/T is within the above-described ranges, fuel efficiency and shock resistance can be improved.

In the tire of the present invention, a tire cross-sectional height Ht is preferably 20.0 mm or more, more preferably 23.0 mm or more, further preferably 24.0 mm or more, particularly preferably 25.0 mm or more. Moreover, the tire cross-sectional height Ht is preferably 30.0 mm or less, more preferably 28.5 mm or less, further preferably 27.5 mm or less.

In the tire of the present invention, a tire cross-sectional width Wt is preferably 200 mm or more, more preferably 220 mm or more, further preferably 230 mm or more, particularly preferably 240 mm or more, from the viewpoint of the effects of the present invention. Moreover, the tire cross-sectional width Wt is preferably 300 mm or less, more preferably 290 mm or less, further preferably 280 mm or less, from the viewpoint of the effects of the present invention.

In the present invention, 70°C tan 5xHt is preferably 2.60 or more, more preferably 2.70 or more, further preferably 2.75 or more. Moreover, 70°C tan 5xHt is preferably 5.00 or less, more preferably 4.50 or less, further preferably 4.00 or less.

In the present invention, 70°C tan $\delta \times$ Wt is preferably 25.0 or more, more preferably 25.5 or more, further preferably 26.0 or more. Moreover, 70°C tan $\delta \times$ Wt is preferably 40.0 or less, more preferably 39.0 or less, further preferably 38.0 or less.

(Minute protrusion/Minute protrusion formation part)

The tire of the present invention comprises a protrusion formation part in which a plurality of minute protrusions are formed on an outer surface of at least one of the pair of the sidewalls.

In the protrusion formation part, the minute protrusions may be in one line or in multiple lines in the tire radial direction. Here, the term "in one line in the tire radial direction" means that the number of lines in which the minute protrusions are arranged in the tire radial direction is less than 2. Moreover, the minute protrusions may be in one line or in multiple lines in the tire circumferential direction. Here, the term "in one line in the tire circumferential direction" means that the number of lines in which the minute protrusions are arranged in the tire circumferential direction is less than 2. The minute protrusions are preferably provided to be in multiple lines in the tire radial direction and in the tire circumferential direction.

A shape of each minute protrusion is not particularly limited as long as it suppresses stress concentration on an outer surface of a sidewall and contributes to improvement of crack resistance of the sidewall, and specific examples of such a shape include a columnar shape, a frustum shape, a rib shape (a streaky shape), and the like. Examples of the columnar shape include a cylindrical shape as well as polygonal prism shapes such as a triangular prism shape, a quadrangular prism shape, a pentagonal prism shape, and the like. Examples of the frustrum shape include a truncated cone shape as well as truncated polygonal pyramids shapes such as a truncated triangular pyramid shape, a truncated quadrangular pyramid shape, a truncated pentagonal prism shape, and the like. Regarding the rib shape, a shape of a cross section of a rib-shaped minute protrusion perpendicular to its longitudinal direction is not particularly limited, and examples of the rib shape can include any rib shapes. Examples of a shape of such cross section include, for example, a rectangle and a trapezoid.

In the protrusion formation part, a clump of minute protrusions may be continuous or may be separated from one another. Here, the term "separated" means that intervals between minute protrusions are greater than 1.0 mm. Accordingly, at least one minute protrusion or two or more minute protrusions may be present on an outer surface of at least one of the pair of the sidewalls.

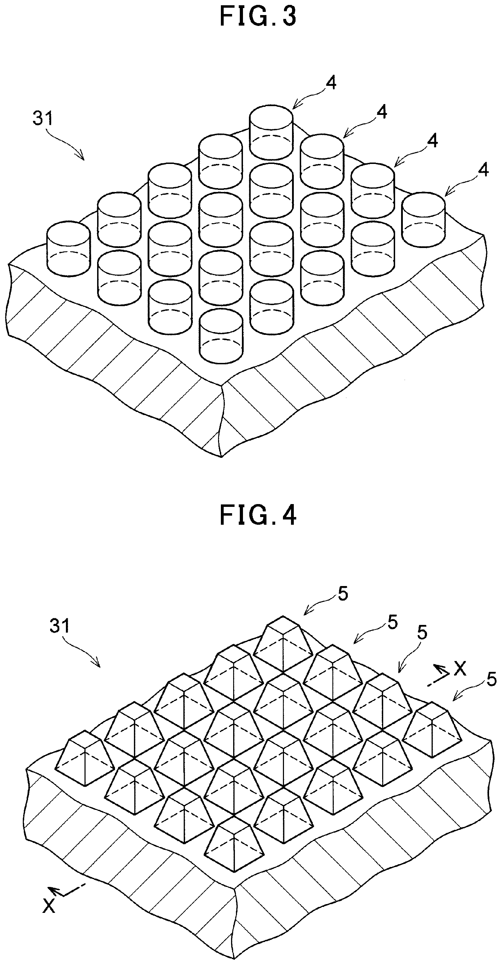

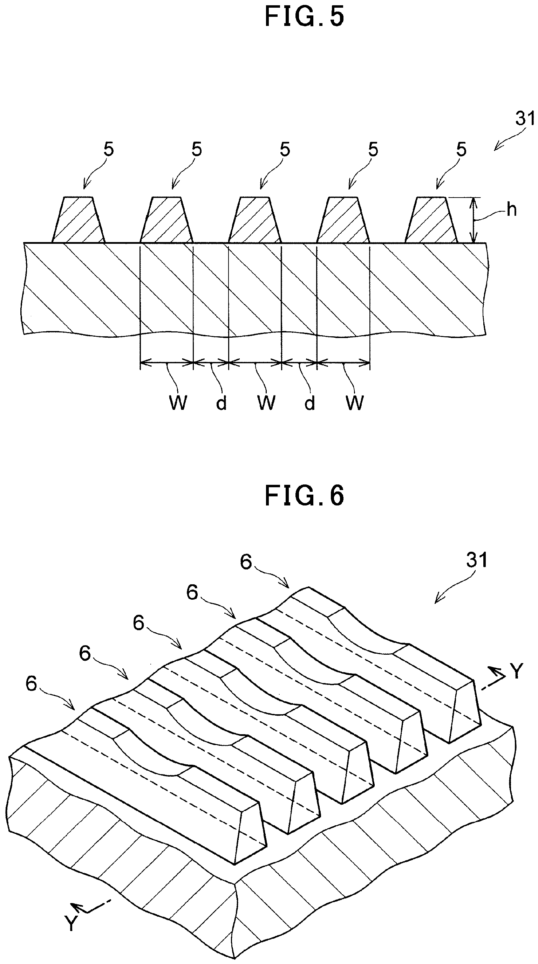

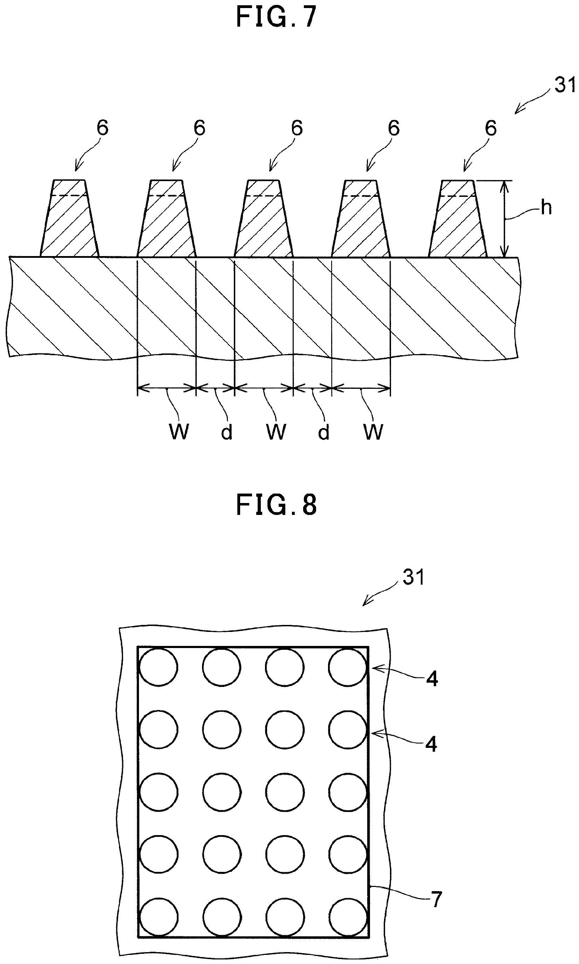

FIG. 3 shows a part of a minute protrusion formation part in which cylindrical minute protrusions 4 are formed on an outer surface of a sidewall 31. FIG. 4 shows a part of a minute protrusion formation part in which truncated quadrangular pyramid-shaped minute protrusions 5 are formed on an outer surface of a sidewall 31. FIG. 5 is a X-X cross-sectional view of FIG. 4 when the minute protrusions are viewed in a direction perpendicular to a plane including a normal line to the outer surface of the sidewall. FIG. 5 shows a height h of each minute protrusions 5, a maximum width w of each minute protrusion 5, and an interval d between minute protrusions 5. FIG. 6 shows a part of a minute protrusion formation part in which rib-shaped minute protrusions 5 are formed on an outer surface of a sidewall 31. FIG. 7 is a Y-Y cross-sectional view of FIG. 6 when the minute protrusions are viewed in a direction perpendicular to a plane including a normal line to the outer surface of the sidewall 31. FIG. 7 shows a height h of each minute protrusions 6, a maximum width w of each minute protrusion 6, and an interval d between minute protrusions 6.

In the protrusion formation part of the present invention, twenty or more minute protrusions are formed in at least one direction. This is because stress concentration on the outer surface of the sidewall is suppressed, so that these minute protrusions can contribute to improvement of crack resistance of the sidewall.

A height h of a highest part of each minute protrusion is preferably 0.03 mm or more, more preferably 0.05 mm or more, further preferably 0.10 mm or more. On the other hand, the height h of the highest part of each minute protrusion is 0.5 mm or less, preferably 0.4 mm or less, or may be 0.3 mm or less. Moreover, the maximum width w of each minute protrusion is preferably 0.03 mm or more or may be 0.05 mm or more or 0.10 mm or more. On the other hand, the maximum width w is preferably 5.0 mm or less, or may be 3.0 mm or less, 1.0 mm or less, or 0.5 mm or less.

An interval between minute protrusions is 0.5 mm or less, preferably 0.3 mm or less, or may be 0.2 mm or less. Besides, the interval between minute protrusions may be at least approximately half the maximum width or may be almost equal to the maximum width.

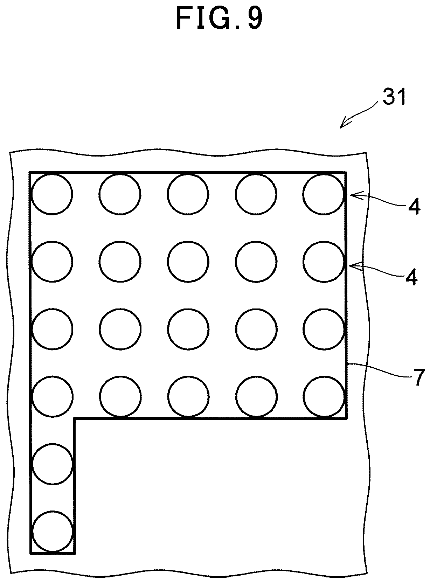

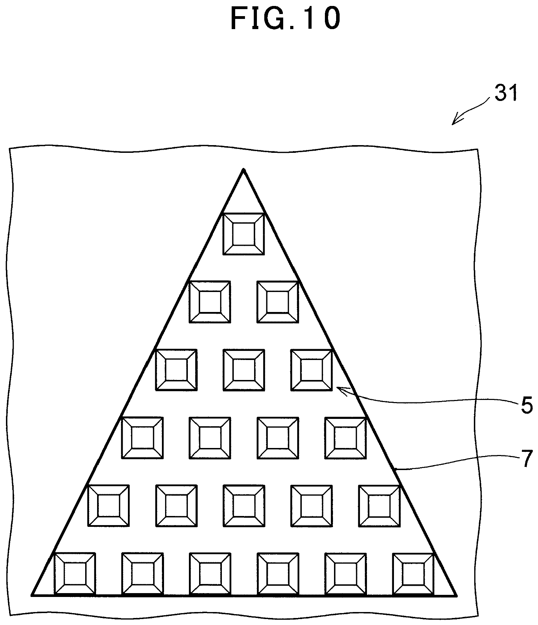

FIGS. 8 to 10 show a part of an outer surface of a sidewall 31 when the sidewall of the tire is developed on a plane. In FIGS. 8 and 9, the cylindrical minute protrusions 4 are formed on the outer surface of the sidewall 31. In FIG. 10, the truncated quadrangular pyramid-shaped minute protrusions 5 are formed on the outer surface of each sidewall 31.

An "area of a protrusion formation part" is defined by a line surrounding outermost parts of a plurality of minute protrusions in the protrusion formation part when a sidewall of a tire is developed on a plane. For example, in FIG. 8, an area of a rectangle defined by a line 7 surrounding the outermost parts of the minute protrusions 4 can be defined as the area of the protrusion formation part. Moreover, in FIG. 9, an area of a hexagon defined by a line 7 surrounding the outermost parts of the minute protrusions 4 can be defined as the area of the protrusion formation part. In FIG. 10, an area of a triangle defined by a line 7 surrounding the outermost parts of the minute protrusions 5 can be defined as the area of the protrusion formation part.

In the present invention, the area of the minute protrusion formation part is 10 mm$^2$ or more, preferably 15 mm$^2$ or more, more preferably 20 mm$^2$ or more, or may be 25 mm$^2$ or more or 30 mm$^2$ or more. Moreover, the area of the minute protrusion formation part is preferably 100 mm$^2$ or less, more preferably 90 mm$^2$ or less, or can be 80 mm$^2$ or less or 50 mm$^2$ or less.

[Rubber composition]

The rubber composition constituting the sidewall of the tire of the present invention will be described below. The rubber composition comprises a rubber component and a filler and can further comprise other compounding agents.

<Rubber component>

The rubber composition constituting the sidewall of the present inventio (which is hereinafter referred to as the "rubber composition of the present invention", unless otherwise noted) preferably comprises, as a rubber component, at least one rubber component selected from the group consisting of an isoprene-based rubber, a styrene-butadiene rubber (SBR), and a butadiene rubber (BR), more preferably comprises at least two rubber components selected from the group consisting of an isoprene-based rubber, a SBR, and a BR, further preferably comprises an isoprene-based rubber and a BR, and particularly preferably comprises an isoprene-based rubber, a SBR, and BR.

(Isoprene-based rubber)

The rubber component preferably comprises an isoprene-based rubber. Examples of the isoprene-based rubber include a natural rubber (NR), an isoprene rubber (IR), a reformed NR, a modified NR, a modified IR, and the like. As the NR, for example, those common in the tire industry can be used, such as SIR20, RSS#3, TSR20, and the like. Examples of the reformed NR include, for example, a deproteinized natural rubber (DPNR), an ultra pure natural rubber, and the like. Examples of the modified NR include, for example, an epoxidized natural rubber (ENR), a hydrogenated natural rubber (HNR), a grafted natural rubber, and the like. Examples of the modified IR include, for example, an epoxidized isoprene rubber, a hydrogenated isoprene rubber, a grafted isoprene rubber, and the like. These isoprene-based rubbers may be used alone, or two or more thereof may be used in combination.

A content I of the isoprene-based rubber in the rubber component is preferably 10% by mass or more, more preferably 15% by mass or more, further preferably 20% by mass or more, further preferably 25% by mass or more, particularly preferably 30% by mass or more. On the other hand, the content I of the isoprene-based rubber in the rubber component is preferably 80% by mass or less, more preferably 75% by mass or less, further preferably 70% by mass or less, further preferably 65% by mass or less, further preferably 60% by mass or less, further preferably 55% by mass or less, particularly preferably 50% by mass or less. When the content of the isoprene-based rubber is within the above-described ranges, flexibility of the sidewall rubber is improved in a wide temperature range, so that it is considered that high-speed durability can be improved.

(SBR)

The SBR is not particularly limited, and for example, an emulsion-polymerized styrene-butadiene rubber (E-SBR), a solution-polymerized styrene-butadiene rubber (S-SBR), and the like can be used. Moreover, the SBR may be a non-modified SBR or a modified SBR. Moreover, as the SBR, a hydrogenated styrene-butadiene copolymer (hydrogenated SBR) can also be used. These SBRs may be used alone, or two or more thereof may be used in combination.

A SBR extended with a plasticizing agent (extended SBR) or a non-extended SBR may be used as the SBR. When the extended SBR is used, an extending amount of the SBR, that is, a content of an extending plasticizing agent in the SBR is preferably 10 to 50 parts by mass based on 100 parts by mass of a rubber solid content of the SBR. As a plasticizing agent used for extending the SBR, for example, oil is appropriately used.

A styrene content of the SBR is preferably greater than 5.0% by mass, more preferably greater than 10.0% by mass, further preferably greater than 20.0% by mass, although it can be appropriately adjusted so as to satisfy a preferable range of the above-mentioned total styrene amount S. The styrene content is preferably less than 40.0% by mass, more preferably less than 35.0% by mass, further preferably less than 30.0% by mass. When the styrene content is within the above-described ranges, fuel efficiency and wet grip performance tend to be improved. Besides, the styrene content of the SBR is measured by the above-described measuring method.

A vinyl content of the SBR is preferably greater than 10 mol%, more preferably greater than 15 mol%, further preferably greater than 20 mol%, from the viewpoints of securing reactivity with another compounding agent and rubber strength. The vinyl content amount is preferably less than 80 mol%, more preferably less than 70 mol%, further preferably less than 65 mol%. Besides, the vinyl content of the SBR is measured by the above-described measuring method.

A weight-average molecular weight (Mw) of the SBR is preferably 200,000 or more, more preferably 250,000 or more, further preferably 300,000 or more, from the viewpoint of the effects of the present invention. Moreover, the weight-average molecular weight is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR in the rubber component can be, for example, 5% by mass or more, 10% by mass or more, or 15% by mass or more, although it can be appropriately selected such that the total styrene amount in the rubber component satisfies the above-described ranges. On the other hand, the content of the SBR in the rubber component is preferably 70% by mass or less, more preferably 60% by mass or less, further preferably 50% by mass or less, particularly preferably 40% by mass or less, from the viewpoint of the effects of the present invention.

(BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. The rubber composition preferably comprises a modified BR. These BRs may be used alone, or two or more thereof may be used in combination.

As the high cis BR, for example, those commercially available from Zeon Corporation, Ube Industries, Ltd., JSR Corporation, etc. can be used. When the rubber composition comprises a high cis BR, a low temperature property and abrasion resistance can be improved. The cis content of the high cis BR is preferably 95 mol% or more, more preferably 96 mol% or more, further preferably 97 mol% or more, particularly preferably 98 mol% or more. Besides, the cis content is measured by the above-described measuring method.

Examples of modified BRs include those obtained by adding a tin compound after polymerizing 1,3-butadiene by a lithium initiator, the terminal of the modified BR molecule being further bonded by tin-carbon bond (tin-modified BRs), a butadiene rubber having a condensed alkoxysilane compound at an active terminal of the butadiene rubber (modified BR for silica), and the like. The rubber composition preferably comprises a tin-modified BR.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of the BR in the rubber component is, but not particularly limited to, preferably 5% by mass or more, more preferably 10% by mass or more, further preferably 15% by mass or more, further preferably 20% by mass or more, particularly preferably 25% by mass or more, from the viewpoint of securing ozone resistance. On the other hand, the content of the BR in the rubber component is preferably 70% by mass or less, more preferably 65% by mass or less, further preferably 60% by mass or less, particularly preferably 55% by mass or less, from the viewpoint of high-speed durability.

(Other rubber components)

The rubber component can also include a rubber component other than the above-described rubber components to an extent so as not to compromise the effects of the present invention, and examples of such a rubber component include, for example, non-diene-based rubbers such as a hydrogenated nitrile rubber (HNBR), a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber, and the like.

<Filler>

The rubber composition relating to the present invention comprises a filler. As a filler, the rubber component preferably comprises silica and more preferably comprises carbon black and silica. Moreover, the filler may consist of carbon black and silica.

(Silica)

Silica is not particularly limited, and those common in the tire industry can be used, such as, for example, silica prepared by a dry process (anhydrous silica), silica prepared by a wet process (hydrous silica), and the like. Moreover, as necessary, silica made from a biomass material such as rice husks and the like may be used. Among them, hydrous silica prepared by a wet process is preferable for the reason that it has many silanol groups. These silica may be used alone, or two or more thereof may be used in combination.

An average primary particle size of silica is preferably 10 nm or more, more preferably 12 nm or more, further preferably 14 nm or more. When the average primary particle size of silica is within the above-described ranges, rubber molecules bound by silica are minimized, and it becomes easy for the rubber molecules to flexibly move, so that dispersibility of silica is improved and durability of the rubber composition is improved. On the other hand, the average primary particle size is preferably 22 nm or less, more preferably 20 nm or less, further preferably 18 nm or less, from the viewpoint of the effects of the present invention. Besides, the average primary particle size of silica is measured by the above-described measuring method.

A nitrogen adsorption specific surface area ($N_2SA$) of silica is preferably 110 $m^2/g$ or more, more preferably 140 $m^2/g$ or more, further preferably 170 $m^2/g$ or more, particularly preferably 180 $m^2/g$ or more, from the viewpoint of the effects of the present invention. Moreover, the $N_2SA$ is preferably 350 $m^2/g$ or less, more preferably 300 $m^2/g$ or less, further preferably 250 $m^2/g$ or less. Besides, the $N_2SA$ of silica is measured by the above-described measuring method.

A content of silica based on 100 parts by mass of the rubber component is preferably 1 part by mass or more, more preferably 3 parts by mass or more, further preferably 5 parts by mass or more, further preferably 10 parts by mass or more, further preferably 12 parts by mass or more, from the viewpoint of obtaining reinforcing property. Moreover, it is preferably less than 55 parts by mass, more preferably less than 50 parts by mass, preferably less than 45 parts by mass, more preferably less than 40 parts by mass, further preferably less than 31 parts by mass, particularly preferably less than 30 parts by mass, from the viewpoint of fuel efficiency.

(Carbon black)

Carbon black is not particularly limited, and those common in the tire industry can be used, such as, for example, GPF, FEF, HAF, ISAF, SAF, and the like. These carbon black may be used alone, or two or more thereof may be used in combination.

An average primary particle size of carbon black is preferably 40 nm or more, more preferably 45 nm or more, further preferably 50 nm or more, particularly preferably 55 nm or more. When the average primary particle size of carbon black is within the above-described ranges, rubber molecules bound by carbon black are minimized, so that it is considered that dispersibility of carbon black is improved. On the other hand, the average primary particle size is preferably 120 nm or less, more preferably 110 nm or less, further preferably 100 nm or less, particularly preferably 90 nm or less, from the viewpoint of the effects of the present invention. Besides, the average primary particle size of carbon black is measured by the above-described measuring method.

A nitrogen adsorption specific surface area ($N_2SA$) of carbon black is preferably 55 $m^2/g$ or less, more preferably 50 $m^2/g$ or less, further preferably 45 $m^2/g$ or less, from the viewpoint of the effects of the present invention. Moreover, the $N_2SA$ is preferably 20 $m^2/g$ or more, more preferably 25 $m^2/g$ or more, further preferably 30 $m^2/g$ or more. Besides, the $N_2SA$ of carbon black is measured by the above-described measuring method.

A content of carbon black when compounded based on 100 parts by mass of the rubber component is preferably 10 parts by mass or more, more preferably 12 parts by mass or more, further preferably 15 parts by mass or more, further preferably 20 parts by mass or more, from the viewpoints of obtaining reinforcing property and preventing deterioration. Moreover, it is preferably less than 55 parts by mass, more preferably 50 parts by mass or less, further preferably 45 parts by mass or less, from the viewpoint of fuel efficiency.

A content ratio of silica to carbon black when they are compounded as fillers is not particularly limited, but a ratio of silica to a total content of silica and carbon black can be, for example, 20% by mass or more, 30% by mass or more, 40% by mass or more, 50% by mass or more, 60% by mass or more, or 70% by mass or more.

(Other fillers)

As fillers other than silica and carbon black, those conventionally and commonly used in the tire industry can be compounded, such as, for example, aluminum hydroxide, calcium carbonate, alumina, clay, talc, and the like.

A total content of the filler based on 100 parts by mass of the rubber component is preferably greater than 5 parts by mass, more preferably greater than 30 parts by mass, further preferably greater than 35 parts by mass, further preferably greater than 40 parts by mass, further preferably greater than 42 parts by mass, from the viewpoint of the effects of the present invention. Moreover, the total content of the filler based on 100 parts by mass of the rubber component is preferably less than 80 parts by mass, more preferably less than 70 parts by mass, further preferably less than 60 parts by mass, particularly preferably less than 50 parts by mass, from the viewpoints of the effects of the present invention.

Besides, in a case where the filler consists of silica and carbon black, when the total content of the filler and a content of one of silica and carbon black are determined as described above, the remaining content of the other of silica and carbon black is accordingly determined.

(Silane coupling agent)

Silica may be used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, NXT-Z100, NXT-Z45, and NXT manufactured by Momentive Performance Materials, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; and chloro-based silane coupling agents such as 3-chloropropyltrimethoxysilane, 3-chloropropyltriethoxysilane, and the like. Among them, sulfide-based silane coupling agents and/or mercapto-based silane coupling agents are preferable, and sulfide-based silane coupling agents are more preferable. These silane coupling agents may be used alone, or two or more thereof may be used in combination.

A content of the silane coupling agent when compounded based on 100 parts by mass of the rubber component preferably 0.5 parts by mass or more, more preferably 1.0 parts by mass or more, further preferably 1.5 parts by mass or more, from the viewpoint of enhancing dispersibility of silica. Moreover, it is preferably 20 parts by mass or less, more preferably 15 parts by mass or less, further preferably 10 parts by mass or less, from the viewpoint of preventing deterioration of abrasion resistance.

A content of the silane coupling agent when compounded based on 100 parts by mass of silica is preferably 1 part by mass or more, more preferably 3 parts by mass or more, further preferably 5 parts by mass or more, particularly preferably 8 parts by mass or more, from the viewpoint of enhancing dispersibility of silica. Moreover, it is preferably 20 parts by mass or less, more preferably 18 parts by mass or less, further preferably 16 parts by mass or less, from the viewpoints of cost and processability.

<Other compounding agents>

Besides the above-described components, the rubber composition relating to the present invention can appropriately comprise compounding agents conventionally and commonly used in the tire industry, such as, for example, a plasticizing agent, wax, processing aid, stearic acid, zinc oxide, an antioxidant, a vulcanizing agent, a vulcanization accelerator, and the like.

(Plasticizing agent)

The plasticizing agent is a material giving a rubber component plasticity and is a concept including both a plasticizing agent that is a liquid (in a liquid state) at normal temperature (25°C) and a plasticizing agent that is a solid at normal temperature (25°C). Examples of the plasticizing agent include a resin component, oil, a liquid polymer, an ester-based plasticizing agent, and the like. The plasticizing agents may be used alone, or two or more thereof may be used in combination.

The rubber composition of the present invention preferably comprises a resin component. Examples of the resin component include thermoplastic resins and thermosetting resins. These resin components may be used alone, or two or more thereof may be used in combination. Two or more types of resin components are preferably used in combination, and a thermoplastic resin and a thermosetting resin are further preferably used in combination.

A "thermoplastic resin" refers to a resin that can be softened and formed when it is heated, and the thermoplastic resin refers to a hydrocarbon resin whose basic skeleton is formed of, particularly, carbon and hydrogen and that is used as a plasticizing agent or a tackifier in a polymer matrix. Examples of the thermoplastic resin include a cyclopentadiene-based resin, a coumarone resin, a petroleum resin (aliphatic petroleum resin, aromatic petroleum resin, alicyclic petroleum resin, and the like), a rosin derivative, and the like, and the rubber composition preferably comprises at least one of a terpene resin and a petroleum resin. The thermoplastic resins may be used alone, or two or more thereof may be used in combination.

Examples of the petroleum resin include, but not particularly limited to, an aliphatic petroleum resin, an aromatic petroleum resin, and an aliphatic/aromatic copolymer-based petroleum resin, and the petroleum resins may be used alone, or two or more thereof may be used in combination. As the aliphatic petroleum resin, a resin obtained by performing cationic polymerization of unsaturated monomers, such as isoprene, cyclopentadiene, and the like, that are petroleum fractions (C5 fractions) having 4 to 5 carbon atoms (which is also referred to as C5-based petroleum resin) can be used.

As the aromatic petroleum resin, a resin obtained by performing cationic polymerization of monomers, such as vinyltoluene, alkylstyrene, indene, and the like, that are petroleum fractions (C9 fractions) having 8 to 10 carbon atoms (which is also referred to as a C9-based petroleum resin) can be used. As the aliphatic/aromatic copolymer-based petroleum resin, a resin obtained by copolymerizing the above-described C5 fractions and the above-described C9 fractions (which is also referred to as a C5-C9-based petroleum resin) are used. Moreover, a resin obtained by hydrogenating one of these petroleum resins may be used. Among them, the aromatic petroleum resin is appropriately used. Examples of the aromatic petroleum resin include, for example, an $\alpha$-methylstyrene-based resin. Examples of the $\alpha$-methylstyrene-based resin include a homopolymer of $\alpha$-methylstyrene (poly-$\alpha$-methylstyrene) and a copolymer of $\alpha$-methylstyrene and another compound including an aromatic compound or a phenolic compound. Examples of such another compound that can constitute this copolymer include styrene, methylstyrene, methoxystyrene, divinylbenzene, and the like. Particularly, a copolymer of $\alpha$-methylstyrene and styrene is preferable. As the $\alpha$-methylstyrene-based resin, those manufactured by Kraton Corporation and the like are appropriately used.

Examples of the terpene-based resin include a polyterpene resin, a terpene phenol resin, a terpene styrene resin, and the like. These terpene-based resins may be used alone, or two or more thereof may be used in combination. Among them, the terpene styrene resin is appropriately used for the reason that its compatibility with both the SBR and the BR is particularly good and sulfur is easily dispersed in the rubber component.

The polyterpene resin is a resin made from at least one kind of raw material selected from terpene compounds such as $\alpha$-pinene, $\beta$-pinene, limonene, dipentene, and the like. The terpene-based resins may be used alone, or two or more thereof may be used in combination.

The terpene phenol resin is a resin made from the above-described terpene compound and a phenol-based compound. The terpene styrene resin is a resin made from the above-described terpene compound and styrene. The polyterpene resin and the terpene styrene resin may be resins undergoing a hydrogeneration process (hydrogenated polyterpene resin, hydrogenated terpene styrene resin). A process of hydrogeneration of the terpene-based resin can be performed by a known method. Moreover, a commercially-available hydrogenated resin can also be used.

In the present invention, a commercially-available product may be used as the terpene-based resin. Examples of such a commercially-available product includes those manufactured and sold by YASUHARA CHEMICAL CO., LTD., etc.

Examples of the rosin-based resin include, but not particularly limited to, for example, a natural resin rosin, and a rosin-modified resin obtained by modifying it by hydrogenation, disproportionation, dimerization, esterification, or the like. The rosin-based resins may be used alone, or two or more thereof may be used in combination.

The coumarone-based resin is a resin comprising coumarone as a main component, examples of which include, for example, a coumarone resin, a coumarone-indene resin, a copolymer resin comprising coumarone, indene, and styrene as main components, and the like. The coumarone-based resins may be used alone, or two or more thereof may be used in combination.

A softening point of the thermoplastic resin is preferably 80°C or higher, more preferably 90°C or higher, further preferably 95°C or higher, from the viewpoint of dispersibility to a styrene domain. Moreover, an upper limit value of the softening point of the thermoplastic resin is, but not particularly limited to, usually 200 °C or lower.

A content of the thermoplastic resin when compounded based on 100 parts by mass of the rubber component is preferably greater than 3 parts by mass, more preferably greater than 5 parts by mass, further preferably greater than 10 parts by mass, from the viewpoint of the effects of the present invention. Moreover, the content of the thermoplastic resin is preferably less than 20 parts by mass, more preferably less than 15 parts by mass, further preferably less than 10 parts by mass, from the viewpoint of the effects of the present invention.

A "thermostatic resin" refers to a resin for which polymerization is performed by heating to cause polymers to form a network structure, so that the resin hardens and does not return to its original state. Examples of the thermosetting resin include, for example, a cashew oil-modified phenol resin, a resorcinol resin, a modified resorcinol resin, a cresol resin, a modified cresol resin, and the like, and the cashew oil-modified phenol resin is preferable. These thermosetting resins may be used alone, or two or more thereof may be used in combination. When a thermosetting resin is compounded in the rubber composition, crack growth resistance can be improved while suppressing an increase of a tan $\delta$ of a rubber.

The cashew oil-modified phenol resin is a resin obtained, for example, by modifying, using cashew oil, a phenol resin that is obtained by reacting phenol with aldehyde such as formaldehyde, acetaldehyde, furfural, and the like using an acid catalyst or an alkali catalyst.

Examples of the resorcinol resin include, for example, a resorcinol-formaldehyde condensate. Examples of the modified resorcinol resin include, for example, those in which a part of a repeating unit of a resorcinol resin is alkylated.

Examples of the cresol resin include, for example, a cresolformaldehyde condensate. Examples of the modified cresol resin include, for example, those in which a methyl group at the terminal of a cresol resin is modified to a hydroxyl group, and those in which a part of a repeating unit of a cresol resin is alkylated.

A softening point of the thermosetting resin is preferably 80°C or higher, more preferably 90°C or higher, further preferably 95°C or higher, from the viewpoint of the effects of the present invention. Moreover, an upper limit value of the softening point of the thermosetting resin is, but not particularly limited to, usually 200 °C or lower.

A content of the thermosetting resin when compounded based on 100 parts by mass of the rubber component is preferably greater than 1 part by mass, more preferably greater than 3 parts by mass, further preferably greater than 4 parts by mass, from the viewpoint of the effects of the present invention. Moreover, the content of the thermoplastic resin is preferably less than 20 parts by mass, more preferably less than 15 parts by mass, further preferably less than 10 parts by mass, from the viewpoint of processability (sheet rollability).

A total content of the resin component based on 100 parts by mass of the rubber component is preferably greater than 10 parts by mass, more preferably greater than 15 parts by mass, further preferably greater than 17 parts by mass, further preferably greater than 20 parts by mass. Moreover, the content of the resin component is preferably less than 50 parts by mass, more preferably less than 40 parts by mass, further preferably less than 30 parts by mass.

Examples of oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like. Moreover, from the viewpoint of a life cycle assessment, one obtained by refining a waste oil after use for a rubber mixing machine or an engine or waste cooking oil used in a cooking facility may also be used. The oil may be used alone, or two or more thereof may be used in combination.

The liquid polymer is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid polymers may be used alone, or two or more thereof may be used in combination.

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

A content of a plasticizing agent other than the resin compound when compounded based on 100 parts by mass of the rubber component (a total amount of all of a plurality of plasticizing agents when used in combination) is preferably greater than 1 part by mass, more preferably greater than 2 parts by mass, further preferably greater than 3 parts by mass. Moreover, the content of the plasticizing agent is preferably less than 50 parts by mass, more preferably less than 40 parts by mass, further preferably less than 30 parts by mass.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, from the viewpoint that the desired effects can be more appropriately obtained, one or more vulcanization accelerators selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

Moreover, when the rubber composition comprises a thermosetting resin, in order to cure the resin component, it is preferable to use partial condensates of hexamethylenetetramine (HMT), hexamethoxymethylmelamine, hexamethoxymethylolmelamine, hexamethylolmelamine pentamethyl ether (HMMPME), and the like, in combination. When they are used in combination, hardness of the thermosetting resin is further increased, and durability can be improved. These thermosetting resins may be used alone, or two or more thereof may be used in combination.

A total content of the vulcanization accelerator when compounded based on 100 parts by mass of the rubber component is preferably 1.0 parts by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition relating to the present invention can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire of the present invention can be produced by a usual method. That is, the tire can be produced by extruding an unvulcanized rubber composition, in which the above-described components are compounded for a rubber component as appropriate, into a shape of each sidewall, attaching the extruded unvulcanized tread together with other tire members on a tire forming machine to form an unvulcanized tire by a usual method, followed by heating and pressurizing this unvulcanized tire in a vulcanizing machine. Examples of the vulcanization condition include, but not particularly limited to, for example, a method of vulcanizing at 150°C to 200°C for 10 to 30 minutes.

<Application >

The tire of the present invention can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire of the present invention can be used as an all-season tire, a summer tire, or a winter tire such as a studless tire.

EXAMPLES

Hereinafter, examples considered to be preferable in implementing the present invention (Examples) will be described, though the scope of the present invention is not limited to only these Examples.

Tires comprising sidewalls produced using rubber compositions obtained by changing compounding formulations in accordance with Table 1 using various chemicals described below are studied, and results are calculated based on various analysis/evaluation methods which will be described below.

NR: TSR 20
SBR 1: HPR850 manufactured by JSR Corporation (S-SBR, styrene content: 27.5% by mass, vinyl content: 59.0 mol%, non-oil extended)
SBR 2: HPR830E manufactured by JSR Corporation (S-SBR, styrene content: 39.5% by mass, vinyl content: 38.5 mol%, oil extended product comprising 10.0 parts by weight of oil based on 100 parts by weight of rubber component)
BR: BR1250H manufactured by Zeon Corporation (tin-modified BR obtained by polymerization using lithium as an initiator, vinyl bond amount: 10-13%, cis content: 39.7 mol%)
Carbon black: DIABLACK (Registered Trademark) E manufactured by Mitsubishi Chemical Corporation (FEN, N550, $N_2SA$: 41 m$^2$/g, average primary particle size: 18 nm)
Silica: Ultrasil 9100GR manufactured by Evonik Degussa GmbH ($N_2SA$: 230 m$^2$/g, average primary particle size: 15 nm)
Silane coupling agent: Si266 manufactured by Evonik Degussa GmbH (bis(3-triethoxysilylpropyl)disulfide)
Resin component 1: YS RESIN PX1150N manufactured by YASUHARA CHEMICAL CO., LTD. (terpene resin, softening point: 115±5°C)
Resin component 2: Sylvatraxx 4401 manufactured by Kraton Corporation ($\alpha$-methylstyrene resin, Mw: 700, softening point: 85°C)
Resin component 3: SUMILITERESIN PR-12686E manufactured by SUMITOMO BAKELITE CO., LTD. (cashew oil-modified phenol resin, softening point: 100°C)
Wax: OZOACE 0355 manufactured by Nippon Seiro Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Zinc oxide: Zinc oxide No. 1 manufactured by Mitsui Mining & Smelting Co., Ltd.
Stearic acid: Bead stearic acid "CAMELLIA" manufactured by NOF CORPORATION
Oil: Diana process NH-70S manufactured by Idemitsu Kosan Co., Ltd. (aromatic process oil)
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))
Vulcanization accelerator 3: Nocceler H manufactured by Ouchi Shinko Chemical Industry Co., Ltd. (hexamethylenetetramine (HMT))

(Examples and Comparative examples)

According to the compounding formulations shown in Table 1, using a 1.7 L closed Banbury mixer, chemicals other than sulfur and a vulcanization accelerator are kneaded for 5 minutes until the temperature reaches a discharge temperature of 170 °C, to obtain a kneaded product. Next, using a twin-screw open roll, sulfur and the vulcanization accelerator are added to the obtained kneaded product, and the mixture is kneaded for 4 minutes until the temperature reaches 105°C, to obtain unvulcanized rubber compositions. The obtained unvulcanized rubber compositions are molded into a shape of each sidewall with an extruder equipped with a mouthpiece having a predetermined shape and attached together with other tire members to produce an unvulcanized tire, and the unvulcanized tire is press-vulcanized under a condition of a temperature at 170°C for 12 minutes, thereby producing each test tire.

Besides, during the press vulcanization, minute protrusions on an outer surface of a sidewall are formed using a mold equipped with a side plate where marks for formation of the minute protrusions are engraved on a surface that is opposite to a minute protrusion formation part. An area of the protrusion formation part, an interval between minute protrusions, the number of minute protrusions, and a height of a highest part are shown in Tables 2 to 4. A truncated quadrangular pyramid is used as a shape of each minute protrusion.

<Crack growth rate>

A biaxial tensile test is performed on a pure shear test piece having vertical edges of 22.4 mm, horizontal edges of 150. 0 mm, and a thickness of 1.0 mm, cut out from a sidewall of each test tire, which will be described below, using Autograph AG-Xplus manufactured by Shimadzu Corporation, in parallel to a vertical direction in a state where both horizontal edges are pinched by an arm, under an atmosphere of a temperature at 25°C, the test piece is fixed at a point of time at which a strain of the test piece becomes 200% and 300%. Then, a cut of 10.0 mm is made using scissors from a middle point of the vertical edge on one side of the test piece, and a video of growth of a crack tip is taken using a high-speed camera (MEMRCAM ACS-1 M60 128G monochrome model) manufactured by nac Image Technology Inc. A rate at which the crack tip develops over a distance of 100.0 mm from an end point of the cut of 10.0 mm to the center part of the sample is measured from data on the taken video. Besides, the test piece is cut out from a part of the sidewall of the test tire on which no minute protrusions are present.

<Measurement of 70°C tan $\delta$>

A test piece is cut out from a sidewall of each test tire, and a loss tangent (tan $\delta$) is measured using a viscoelastic spectrometer RSA-G2 manufactured by TA Instruments, Inc., under a condition of a temperature at 70°C, a frequency of 10 Hz, an initial strain of 5%, and a dynamic strain of $\pm$1% according to JIS K 6394: 2007.

<High-speed durability index>

A test for high-speed durability is performed on each test tire using a drum testing machine under a condition of a rim of 245/35ZR20×8.5J, an internal pressure of 360 kPa, a load of 4.61 kN, a room temperature at 41 °C, and a camber angle of 0° by a step speed method. In the test, a speed is increased from 260 km/h by 10 km/s every time the tire runs for 10 minutes, and evaluations are performed, based on a running time until the tire is destroyed, using indexes with a value of a reference Comparative example (Comparative example 5) being as 100. The results show that the higher the value of the index is, the better the high-speed durability is.

Table 1

| Compounding amount (part by mass) | S1 | S2 | S3 | S4 | S5 | S6 | S7 | S8 | S9 | S10 | S11 | S12 |
|---|---|---|---|---|---|---|---|---|---|---|---|---|
| NR | 45 | 45 | 40 | 30 | 60 | 60 | 45 | 45 | 45 | 100 | 40 | 45 |
| SBR 1 | 15 | - | 30 | - | - | - | - | - | - | - | 30 | 20 |
| SBR 2 | - | 16.5 | - | 44 | - | 44 | 16.5 | 16.5 | 16.5 | - | - | - |
| (Solid rubber content) | - | (15) | - | (40) | - | (40) | (15) | (15) | (15) | - | - | - |
| BR | 40 | 40 | 30 | 30 | 40 | - | 40 | 40 | 40 | - | 30 | 35 |
| Carbon black | 25 | 25 | 25 | 15 | 25 | 25 | 40 | 60 | 5 | 25 | 25 | 25 |
| Silica | 15 | 15 | 30 | 30 | 15 | 15 | - | 15 | 45 | 15 | 15 | 15 |
| Silane coupling agent | 1.5 | 1.5 | 2.0 | 2.0 | 1.5 | 1.5 | - | 1.5 | 4.5 | 1.5 | 1.5 | 1.5 |
| Resin component 1 | 10 | - | 10 | 15 | 15 | 15 | 15 | 15 | 15 | 15 | - | 15 |
| Resin component 2 | 5.0 | 15 | 5.0 | - | - | - | - | - | - | - | - | - |
| Resin component 3 | 5.0 | 5.0 | - | 5.0 | 5.0 | 5.0 | 5.0 | 5.0 | 5.0 | 5.0 | 5.0 | 5.0 |
| Wax | 1.0 | 1.0 | 1.0 | 1.0 | 1.0 | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 | 3.0 | 3.0 | 3.0 | 3.0 | 3.0 |
| Antioxidant 2 | 1.0 | 1.0 | 1.0 | 1.0 | 1.0 | 1.0 | 1.0 | 1.0 | 1.0 | 1.0 | 1.0 | 1.0 |
| Zinc oxide | 3.0 | 3.0 | 3.0 | 3.0 | 3.0 | 3.0 | 3.0 | 3.0 | 3.0 | 3.0 | 3.0 | 3.0 |
| Stearic acid | 2.5 | 2.5 | 2.5 | 2.5 | 2.5 | 2.5 | 2.5 | 2.5 | 2.5 | 2.5 | 2.5 | 2.5 |
| Oil | 10 | 15 | 15 | 15 | 15 | 15 | 15 | 15 | 15 | 15 | 15 | 15 |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 1.0 | 1.0 | 1.0 | 1.0 | 1.0 | 1.0 | 1.0 | 1.0 | 1.0 | 1.0 | 1.0 | 1.0 |
| Vulcanization accelerator 2 | 0.5 | 0.5 | 0.5 | 0.5 | 0.5 | 0.5 | 0.5 | 0.5 | 0.5 | 0.5 | 0.5 | 0.5 |
| Vulcanization accelerator 3 | 0.5 | 0.5 | 0.5 | 0.5 | 0.5 | 0.5 | 0.5 | 0.5 | 0.5 | 0.5 | 0.5 | 0.5 |
| Crack growth rate in case of strain of 250% (m/s) | 0.20 | 0.07 | 0.04 | 0 | 0.17 | 0.06 | 0.20 | 0.03 | 0 | 0.25 | 0.30 | 0.21 |
| Crack growth rate in case of strain of 300% (m/s) | 0.25 | 0.15 | 0.07 | 0.01 | 0.24 | 0.10 | 0.28 | 0.08 | 0.01 | 0.34 | 0.48 | 0.26 |
| 70°C tan δ (°C) | 0.110 | 0.105 | 0.123 | 0.136 | 0.112 | 0.110 | 0.114 | 0.161 | 0.152 | 0.135 | 0.102 | 0.110 |
| Content of isoprene-based rubber I (% by mas) | 45 | 45 | 40 | 30 | 60 | 60 | 45 | 45 | 45 | 100 | 40 | 45 |

Table 2

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Compounding for sidewall | S1 | S2 | S3 | S4 | S5 | S6 | S7 | S8 | S9 | S12 | S2 | S2 |
| Crack growth rate in case of strain of 250% (m/s) | 0.20 | 0.07 | 0.04 | 0 | 0.17 | 0.06 | 0.20 | 0.03 | 0 | 0.21 | 0.07 | 0.07 |
| Crack growth rate in case of strain of 300% (m/s) | 0.25 | 0.15 | 0.07 | 0.01 | 0.24 | 0.10 | 0.28 | 0.08 | 0.01 | 0.26 | 0.15 | 0.15 |
| Area of protrusion formation part (mm$^2$) | 30 | 30 | 30 | 30 | 30 | 30 | 30 | 30 | 30 | 30 | 30 | 30 |
| Interval between minute protrusions (mm) | 0.2 | 0.2 | 0.2 | 0.2 | 0.2 | 0.2 | 0.2 | 0.2 | 0.2 | 0.2 | 0.2 | 0.2 |
| The number of minute protrusions | 50 | 50 | 50 | 50 | 50 | 50 | 50 | 50 | 50 | 50 | 50 | 50 |
| Height of highest part of minute protrusion (mm) | 0.3 | 0.3 | 0.3 | 0.3 | 0.3 | 0.3 | 0.3 | 0.3 | 0.3 | 0.3 | 0.3 | 0.3 |
| 70°C tan $\delta$ | 0.110 | 0.105 | 0.123 | 0.136 | 0.112 | 0.110 | 0.114 | 0.161 | 0.152 | 0.110 | 0.105 | 0.105 |
| S (% by mass) | 4.1 | 5.9 | 8.3 | 15.8 | 0 | 15.8 | 5.9 | 5.9 | 5.9 | 5.5 | 5.9 | 5.9 |
| I (% by mass) | 45 | 45 | 40 | 30 | 60 | 60 | 45 | 45 | 45 | 45 | 45 | 45 |
| Thickness of surface layer rubber (mm) | 2.0 | 2.0 | 2.0 | 2.0 | 2.0 | 2.0 | 2.0 | 2.0 | 2.0 | 2.0 | 6.0 | 2.0 |
| S/T | 2.1 | 3.0 | 4.2 | 7.9 | 0 | 7.9 | 3.0 | 3.0 | 3.0 | 2.8 | 1.0 | 3.0 |
| I/T | 22.5 | 22.5 | 20.0 | 15.0 | 30.0 | 30.0 | 22.5 | 22.5 | 22.5 | 22.5 | 7.5 | 22.5 |
| Maximum load capacity of tire $W_L$ (kg) | 580 | 580 | 580 | 580 | 580 | 580 | 580 | 580 | 580 | 580 | 580 | 615 |
| Tire weight G (kg) | 8.5 | 8.5 | 8.5 | 8.5 | 8.5 | 8.5 | 8.5 | 8.5 | 8.5 | 8.5 | 8.5 | 8.1 |
| $G/W_L$ | 0.0147 | 0.0147 | 0.0147 | 0.0147 | 0.0147 | 0.0147 | 0.0147 | 0.0147 | 0.0147 | 0.0147 | 0.0147 | 0.0132 |
| Tire cross-sectional height Ht (mm) | 25.4 | 25.4 | 25.4 | 25.4 | 25.4 | 25.4 | 25.4 | 25.4 | 25.4 | 25.4 | 25.4 | 25.4 |
| Tire cross-sectional width Wt (mm) | 245 | 245 | 245 | 245 | 245 | 245 | 245 | 245 | 245 | 245 | 245 | 245 |
| 70°tan $\delta$ ×Ht | 2.794 | 2.667 | 3.124 | 3.454 | 2.845 | 2.794 | 2.896 | 4.089 | 3.861 | 2.794 | 2.667 | 2.667 |
| 70°tan $\delta$ ×Wt | 26.95 | 25.73 | 30.14 | 33.32 | 27.44 | 26.95 | 27.93 | 39.45 | 37.24 | 26.95 | 25.73 | 25.73 |
| High-speed durability index | 102 | 108 | 110 | 112 | 105 | 109 | 104 | 105 | 112 | 101 | 110 | 109 |

Table 3

| | Example | | | | | | | |
|---|---|---|---|---|---|---|---|---|
| | 13 | 14 | 15 | 16 | 17 | 18 | 19 | 20 |
| Compounding for sidewall | S2 | S2 | S2 | S2 | S2 | S2 | S2 | S2 |
| Crack growth rate in case of strain of 250% (m/s) | 0.07 | 0.07 | 0.07 | 0.07 | 0.07 | 0.07 | 0.07 | 0.07 |
| Crack growth rate in case of strain of 300% (m/s) | 0.15 | 0.15 | 0.15 | 0.15 | 0.15 | 0.15 | 0.15 | 0.15 |
| Area of protrusion formation part (mm$^2$) | 50 | 15 | 30 | 30 | 30 | 30 | 30 | 30 |
| Interval between minute protrusions (mm) | 0.2 | 0.2 | 0.1 | 0.3 | 0.2 | 0.2 | 0.2 | 0.2 |
| The number of minute protrusions | 50 | 50 | 50 | 50 | 75 | 25 | 50 | 50 |
| Height of highest part of minute protrusion (mm) | 0.3 | 0.3 | 0.3 | 0.3 | 0.3 | 0.3 | 0.1 | 0.4 |
| 70°C tan $\delta$ | 0.105 | 0.105 | 0.105 | 0.105 | 0.105 | 0.105 | 0.105 | 0.105 |
| S (% by mass) | 5.9 | 5.9 | 5.9 | 5.9 | 5.9 | 5.9 | 5.9 | 5.9 |
| I (% by mass) | 45 | 45 | 45 | 45 | 45 | 45 | 45 | 45 |
| Thickness of surface layer rubber (mm) | 2.0 | 2.0 | 2.0 | 2.0 | 2.0 | 2.0 | 2.0 | 2.0 |
| S/T | 3.0 | 3.0 | 3.0 | 3.0 | 3.0 | 3.0 | 3.0 | 3.0 |
| I/T | 22.5 | 22.5 | 22.5 | 22.5 | 22.5 | 22.5 | 22.5 | 22.5 |
| Maximum load capacity of tire $W_L$ (kq) | 580 | 580 | 580 | 580 | 580 | 580 | 580 | 580 |
| Tire weight G (kg) | 8.5 | 8.5 | 8.5 | 8.5 | 8.5 | 8.5 | 8.5 | 8.5 |
| G/$W_L$ | 0.0147 | 0.0147 | 0.0147 | 0.0147 | 0.0147 | 0.0147 | 0.0147 | 0.0147 |
| Tire cross-sectional height Ht (mm) | 25.4 | 25.4 | 25.4 | 25.4 | 25.4 | 25.4 | 25.4 | 25.4 |
| Tire cross-sectional width Wt (mm) | 245 | 245 | 245 | 245 | 245 | 245 | 245 | 245 |
| 70°tan $\delta \times$ Ht | 2.667 | 2.667 | 2.667 | 2.667 | 2.667 | 2.667 | 2.667 | 2.667 |
| 70°tan $\delta \times$ Wt | 25.73 | 25.73 | 25.73 | 25.73 | 25.73 | 25.73 | 25.73 | 25.73 |
| High-speed durability index | 107 | 106 | 106 | 107 | 107 | 106 | 104 | 108 |

Table 4

| | Comparative example | | | | |
|---|---|---|---|---|---|
| | 1 | 2 | 3 | 4 | 5 |
| Compounding for sidewall | S10 | S11 | S2 | S2 | S2 |
| Crack growth rate in case of strain of 250% (m/s) | 0.25 | 0.30 | 0.07 | 0.07 | 0.07 |
| Crack growth rate in case of strain of 300% (m/s) | 0.34 | 0.48 | 0.15 | 0.15 | 0.15 |
| Area of protrusion formation part (mm$^2$) | 30 | 30 | 5 | 30 | 30 |

(continued)

| | Comparative example | | | | |
|---|---|---|---|---|---|
| | 1 | 2 | 3 | 4 | 5 |
| Interval between minute protrusions (mm) | 0.2 | 0.2 | 0.2 | 0.8 | 0.2 |
| The number of minute protrusions | 50 | 50 | 50 | 50 | 50 |
| Height of highest part of minute protrusion (mm) | 0.3 | 0.3 | 0.3 | 0.3 | 0.8 |
| 70°C tan $\delta$ | 0.135 | 0.102 | 0.105 | 0.105 | 0.105 |
| S (% by mass) | 0 | 8.3 | 5.9 | 5.9 | 5.9 |
| I (% by mass) | 100 | 40 | 45 | 45 | 45 |
| Thickness of surface layer rubber (mm) | 2.0 | 2.0 | 2.0 | 2.0 | 2.0 |
| S/T | 0 | 4.2 | 3.0 | 3.0 | 3.0 |
| I/T | 50.0 | 20.0 | 22.5 | 22.5 | 22.5 |
| Maximum load capacity of tire $W_L$ (kg) | 580 | 580 | 580 | 580 | 580 |
| Tire weight G (kg) | 8.5 | 8.5 | 8.5 | 8.5 | 8.5 |
| $G/W_L$ | 0.0147 | 0.0147 | 0.0147 | 0.0147 | 0.0147 |
| Tire cross-sectional height Ht (mm) | 25.4 | 25.4 | 25.4 | 25.4 | 25.4 |
| Tire cross-sectional width Wt (mm) | 245 | 245 | 245 | 245 | 245 |
| 70°tan $\delta \times$ Ht | 3.429 | 2.591 | 2.667 | 2.667 | 2.667 |
| 70°tan $\delta \times$ Wt | 33.08 | 24.99 | 25.73 | 25.73 | 25.73 |
| High-speed durability index | 95 | 90 | 98 | 99 | 100 |

<Embodiments>

Examples of the embodiments of the present invention are shown below.

[1] A tire comprising a pair of sidewalls,

wherein each of the pair of sidewalls is composed of a rubber composition comprising a rubber component and a filler,
wherein a crack growth rate of the rubber composition measured under a following test condition satisfies at least one of:

0.20 m/s or less in a case where a strain of a fixed test piece (constant strain) is 250%; and
0.30 m/s or less in a case where a strain of the fixed test piece (constant strain) is 300%,

wherein the pair of sidewalls comprises a protrusion formation part in which a plurality of minute protrusions are formed on an outer surface, and an area of the protrusion formation part is 10 mm$^2$ or more,
wherein twenty or more minute protrusions are formed at intervals of 0.5 mm or less on the protrusion formation part in at least one direction, and
wherein a height of a highest part of each of the twenty or more minute protrusions is 0.5 mm or less, preferably 0.3 mm or less,

(Test condition)

Test piece: pure shear test piece having vertical edges of 22. 4 mm, horizontal edges of 150.0 mm, and a thickness of 1.0 mm, and

Test method: a biaxial tensile test is performed in parallel to a vertical direction of the test piece, the test piece is then fixed, and a cut of 10.0 mm is made in parallel to the horizontal direction from a center point of the vertical edge on one side of the test piece.

[2] The tire of [1] above, wherein the filler comprises silica.

[3] The tire of [1] or [2] above, wherein a total content of the filler based on 100 parts by mass of the rubber component is greater than 5 parts by mass and less than 50 parts by mass, preferably greater than 30 parts by mass and less than 50 parts by mass, more preferably greater than 35 parts by mass and less than 50 parts by mass.

[4] The tire of any one of [1] to [3] above, wherein a tan $\delta$ at 70°C (70°C tan $\delta$) of the rubber composition is 0.10 or more, preferably 0.11 or more.

[5] The tire of any one of [1] to [4] above, wherein a total styrene amount S, in % by mass, of the rubber component is greater than 1% by mass and less than 15% by mass.

[6] The tire of any one of [1] to [5] above, wherein S/T is 1.0 or more and 9.0 or less, preferably 1.5 or more and 6.0 or less, more preferably 2.0 or more and 5.5 or less, further preferably 2.5 or more and 5.0 or less, where a thickness of each sidewall at a maximum width position of the tire is referred to as T, in mm, and the total styrene amount of the rubber component is referred to as S, in % by mass.

[7] The tire of any one of [1] to [6] above, wherein the rubber component comprises an isoprene-based rubber.

[8] The tire of any one of [1] to [7] above, wherein I/T is 15.0 or more, preferably 20.0 or more, more preferably 22.0 or more, where a thickness of each sidewall at a maximum width position of the tire is referred to as T, in mm, and a content of the isoprene-based rubber in the rubber component is referred to as I, in % by mass.

[9] The tire of any one of [1] to [8] above, wherein a ratio ($G/W_L$) of a tire weight G, in kg, to a maximum load capacity $W_L$, in kg, of the tire is 0.0210 or less, preferably 0.205 or less, more preferably 0.200 or less.

[10] The tire of any one of [1] to [9] above, wherein a product (70°C tan $\delta\times$Ht) of the tan $\delta$ at 70°C of the rubber composition and a tire cross-sectional height Ht, in mm, is 2.60 or more, preferably 2.70 or more, more preferably 2.75 or more.

[11] The tire of any one of [1] to [10] above, wherein a product (70°C tan $\delta\times$Wt) of the tan $\delta$ at 70°C of the rubber composition and a tire cross-sectional width Wt, in mm, is 25.0 or more, preferably 25.5 or more, more preferably 26.0 or more.

[12] The tire of any one of [1] to [11] above, wherein the rubber composition further comprises a resin component.

[13] The tire of any one of [1] to [12] above, wherein a shape of each of the minute protrusions is columnar, frustum-shaped, or rib-shaped.

[14] The tire of any one of [1] to [13] above, wherein the tire is a tire for a passenger car.

REFERENCE SIGNS LIST

| | |
|---|---|
| 1 | Tread |
| 2 | Belt |
| 3 | Band |
| 4 | Cylindrical minute protrusion |
| 5 | Truncated quadrangular pyramid-shaped minute protrusion |
| 6 | Rib-shaped minute protrusion |
| 7 | Line surrounding outermost parts of minute protrusions |
| 21 | Bead core |
| 22 | Beads apex |
| 23 | Rim cushion |
| 24 | Clinch apex |
| 25 | Strip apex |
| 31 | Sidewall |
| 32 | Inner liner |
| 33 | Carcass |
| CL | Tire equator |
| T | Thickness of surface rubber layer at tire maximum width position |
| PW | Tire maximum width position |
| w | Maximum width of minute protrusion |
| d | Intervals between minute protrusions |
| h | Height of minute protrusion |

Wt    Tire cross-sectional width
Ht    Tire cross-sectional height
Dt    Tire outer diameter

**Claims**

1.  A tire comprising a pair of sidewalls,

wherein each of the pair of sidewalls is composed of a rubber composition comprising a rubber component and a filler,
wherein a crack growth rate of the rubber composition measured under a following test condition satisfies at least one of:

0.20 m/s or less in a case where a strain of a fixed test piece (constant strain) is 250%; and
0.30 m/s or less in a case where a strain of the fixed test piece (constant strain) is 300%,

wherein the pair of sidewalls comprises a protrusion formation part in which a plurality of minute protrusions are formed on an outer surface, and an area of the protrusion formation part is 10 mm$^2$ or more,
wherein twenty or more minute protrusions are formed at intervals of 0.5 mm or less on the protrusion formation part in at least one direction, and
wherein a height of a highest part of each of the twenty or more minute protrusions is 0.5 mm or less,

(Test condition)

Test piece: pure shear test piece having vertical edges of 22. 4 mm, horizontal edges of 150.0 mm, and a thickness of 1.0 mm, and
Test method: a biaxial tensile test is performed in parallel to a vertical direction of the test piece, the test piece is then fixed, and a cut of 10.0 mm is made in parallel to the horizontal direction from a center point of the vertical edge on one side of the test piece.

2.  The tire of claim 1, wherein the filler comprises silica.

3.  The tire of claim 1 or 2, wherein a total content of the filler based on 100 parts by mass of the rubber component is greater than 5 parts by mass and less than 50 parts by mass.

4.  The tire of any one of claims 1 to 3, wherein a tan $\delta$ at 70°C (70°C tan $\delta$) of the rubber composition is 0.10 or more.

5.  The tire of any one of claims 1 to 4, wherein a total styrene amount S, in % by mass, of the rubber component is greater than 1% by mass and less than 15% by mass.

6.  The tire of any one of claims 1 to 5, wherein S/T is 1.0 or more and 9.0 or less, where a thickness of each sidewall at a maximum width position of the tire is referred to as T, in mm, and the total styrene amount of the rubber component is referred to as S, in % by mass.

7.  The tire of any one of claims 1 to 6, wherein the rubber component comprises an isoprene-based rubber.

8.  The tire of any one of claims 1 to 7, wherein I/T is 15.0 or more, where a thickness of each sidewall at a maximum width position of the tire is referred to as T, in mm, and a content of the isoprene-based rubber in the rubber component is referred to as I, in % by mass.

9.  The tire of any one of claims 1 to 8, wherein a ratio (G/$W_L$) of a tire weight G, in kg, to a maximum load capacity $W_L$, in kg, of the tire is 0.0210 or less.

10.  The tire of any one of claims 1 to 9, wherein a product (70°C tan $\delta \times$ Ht) of the tan $\delta$ at 70°C of the rubber composition and a tire cross-sectional height Ht, in mm, is 2.60 or more.

11.  The tire of any one of claims 1 to 10, wherein a product (70°C tan $\delta \times$ Wt) of the tan $\delta$ at 70°C of the rubber composition and a tire cross-sectional width Wt, in mm, is 25.0 or more.

12. The tire of any one of claims 1 to 11, wherein the rubber composition further comprises a resin component.

13. The tire of any one of claims 1 to 12, wherein a shape of each of the minute protrusions is columnar, frustum-shaped, or rib-shaped.

14. The tire of any one of claims 1 to 13, wherein the tire is a tire for a passenger car.

(a)

150.0

22.4 12.4

(b)

Φ5.0

17.4 1.0

FIG. 1

# FIG. 2

# FIG. 3

# FIG. 4

# FIG. 5

# FIG. 6

# FIG. 7

# FIG. 8

# FIG. 9

31

4

4

7

# FIG.10

# FIG.11

Europäisches
Patentamt

European
Patent Office

Office européen
des brevets

# EUROPEAN SEARCH REPORT

Application Number

EP 23 20 6579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/240881 A1 (SUMITOMO RUBBER IND [JP]) 2 December 2021 (2021-12-02) * claims 1,9-11,15 * * figures 6,7(a),7(b),8(a),8(b) * * paragraphs [0003], [0052] – [0057] * | 1-14 | INV. B60C1/00 B60C13/02 C08L7/00 C08L9/06 C08L9/00 C08K3/04 C08K3/36 |
| A | EP 1 125 770 A2 (SUMITOMO RUBBER IND [JP]) 22 August 2001 (2001-08-22) * claims; figures * | 1-14 | |
| X | EP 3 981 611 A1 (SUMITOMO RUBBER IND [JP]) 13 April 2022 (2022-04-13) * claims; examples * | 1-14 | |

TECHNICAL FIELDS
SEARCHED (IPC)

B60C
C08L
C08K

The present search report has been drawn up for all claims

| Place of search | Date of completion of the search | Examiner |
|---|---|---|
| Munich | 21 March 2024 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 20 6579

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | Publication date | Patent family member(s) | | Publication date |
|---|---|---|---|---|---|
| WO 2021240881 | A1 | 02-12-2021 | CN | 114867619 A | 05-08-2022 |
| | | | EP | 4155095 A1 | 29-03-2023 |
| | | | JP | 7044212 B1 | 30-03-2022 |
| | | | JP | WO2021240881 A1 | 02-12-2021 |
| | | | US | 2023202236 A1 | 29-06-2023 |
| | | | WO | 2021240881 A1 | 02-12-2021 |
| EP 1125770 | A2 | 22-08-2001 | CN | 1309037 A | 22-08-2001 |
| | | | DE | 60106503 T2 | 02-02-2006 |
| | | | EP | 1125770 A2 | 22-08-2001 |
| | | | JP | 3337453 B2 | 21-10-2002 |
| | | | JP | 2001225613 A | 21-08-2001 |
| | | | US | 2001017178 A1 | 30-08-2001 |
| EP 3981611 | A1 | 13-04-2022 | CN | 114316382 A | 12-04-2022 |
| | | | EP | 3981611 A1 | 13-04-2022 |
| | | | JP | 7014274 B1 | 01-02-2022 |
| | | | JP | 2022063032 A | 21-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018109126 A